# EUROPÄISCHE PATENTSCHRIFT

(11) **EP 0 585 605 B1**
(45) Veröffentlichungstag und Bekanntmachung des Hinweises auf die Patenterteilung: **28.05.1997**
(21) Anmeldenummer: 93112102.4
(22) Anmeldetag: 29.07.1993
(51) Int. Cl.: B29C 55/16

(54) **Verfahren zum Schrumpfen biaxial gereckter thermoplastischer Folienbahnen und Vorrichtung zur Durchführung des Verfahrens**
Method of shrinking biaxially stretched thermoplastic film and apparatus for carrying out this method
Méthode de réfrécissement de films thermoplastiques bi-étiré et appareil pour la mise en oeuvre de cette méthode

(30) Priorität: 04.09.1992 DE 4229535
(43) Veröffentlichungstag der Anmeldung: 09.03.1994
(73) Patentinhaber: LINDAUER DORNIER GESELLSCHAFT M.B.H, D-88131 Lindau (DE)
(72) Erfinder: Rutz, Andreas, Dr. Ing., D-88131 Lindau (DE)

(56) Entgegenhaltungen:
- EP-A- 0 486 263
- EP-A- 0 523 430
- EP-A- 0 523 431

## Beschreibung

Ein zum Patent angemeldetes Verfahren zum Schrumpfen biaxial gereckter Folienbahnen beruht auf dem Prinzip der Ausnutzung der Längendifferenz zwischen einer wellenförmig in die Folienreckvorrichtung eingeführten Folienbahn und einer ebenflächig eingeführten Folienbahn.

Eine erste Möglichkeit einen Schrumpf in einer zu behandelnden Folienbahn zu realisieren ist also dann gegeben, wenn die Folienbahn bereits in Wellenform der Folienreckvorrichtung zugeführt wird, siehe auch EP-A-0 486 263.
Hierbei ergeben sich aber erhebliche Schwierigkeiten beim Einführen der Folienbahn.
Zum einen müssen die Kluppenkörper zur Einführung einer gewellten Folienbahn entsprechend ausgebildet sein und zum anderen muß die Kettengeschwindigkeit um den Schrumpfbetrag geringer sein als die Zuführgeschwindigkeit der Folienbahn.
In der DE-Patentanmeldung P 41 23 476.6 wurde eine entsprechende Lösung zur Aufnahme einer wellenartig ausgebildeten Folienbahn durch Spannkluppen aufgezeigt.

Eine zweite Möglichkeit einen Schrumpf in einer zu behandelnden Folienbahn zu realisieren besteht darin, daß die Folienbahn ebenflächig zugeführt und die Wellenform der Folienbahn im aufgeheizten Bereich durch eine zusätzliche Längsreckung erzeugt wird, ohne daß dabei die Folieneigenschaften verändert werden.
In diesem Falle stellt sich nicht das Einführen der Folienbahn in die Reckvorrichtung als schwierig dar, sondern die Übertragung der erforderlichen Reckkräfte im aufgeheizten Bereich auf die Spannkluppen. Die DE-Patentanmeldung 41 23 476.6 löst diese Schwierigkeiten, indem die Längenänderung, die auch ein Schrumpfen einer Folienbahn beinhaltet, dadurch erfolgt, daß jede Kluppe als Schwenkkluppe ausgebildet ist, d.h. das Greifteil ist um eine in dem Rollteil vorhandenen Achse schwenkbar gelagert, welche Achse parallel zur Ebene der Folienbahn angeordnet ist.

Auch bei z.B. Folienreckmaschinen mit einer geringen Einzugsgeschwindigkeit für die Folienbahn ist die Anwendung der Lösung nach der DE-Patentanmeldung P 41 23 476.6 denkbar, wonach die ebenflächige Folienbahn im Einlaßbereich der Reckvorrichtung in Spannkluppen gespannt wird, deren lageveränderliche Spannmittel (Kluppentisch und Kluppenkläppchen) parallel zur Folienbahn ausgerichtet sind.
Hier wird der Folienrand von einem Spannkluppenpaar erfaßt, eingespannt und die Spannmittel unmittelbar nach dem Einspannen, noch bevor das nächste Kluppenpaar den Folienrand klemmt, die Spannmittel in ihrer Lage verändert, nämlich vorzugsweise geschwenkt. Diese Verfahrensweise ist jedoch nur bis zu einer gewissen Geschwindigkeit der Kluppenkette möglich, da der Umsteuermechanismus für die Spannmittel relativ schnell arbeiten muß. Für hohe Kettengeschwindigkeiten sind diesbezügliche Umsteuermechanismen aufgrund von sich einstellenden mechanischen Problemen ungeeignet.

Bei bekannten Spannkluppenausführungen, die ein Schrumpfen der Folienbahn auf der Grundlage einer Teilungsveränderung zwischen den einzelnen Spannkluppen einer Kluppenkette ermöglichen, ist ein problemloses Einführen der Folienbahn in die Reckvorrichtung gegeben. Diese Lösungen sehen allerdings keine lageveränderlichen Spannmittel in den Spannkluppen vor.
Die Probleme, die sich aus der Teilungsänderung ergeben, bestehen im Aufbringen relativ hoher Verstellkräfte beim Übergang der normalen Teilung "T" zur Schrumpfteilung "t".
Ihre Ursachen sind darin begründet, daß die Veränderung der Kluppenkettenteilung in Bereichen ansetzt, in denen höchste Kluppenketten-Lasten vorliegen. Alle in der Kluppenkette wirkenden Kräfte laufen damit auch über den Verstellmechanismus, der in der Regel jeweils am Kluppenkörper bzw. zwischen zwei Kluppenkörper in der Kluppenkette angreift.

Aufgabe der Erfindung ist es daher, innerhalb des Prozesses zur biaxialen Reckung thermoplastischer Folienbahnen diese, unter Aufwendung geringer Stellkräfte zur Teilungs- und Lageveränderung von Kluppenkette und Spannkluppe, einer definierten Schrumpfung zu unterwerfen und eine Vorrichtung zur Durchführung des Verfahrens anzugeben.

Erfindungsgemäß wird die Aufgabe nach den Merkmalen der Patentansprüche 1 und 6 gelöst.
Ausgestaltende Merkmale der Erfindung sind in den weiteren Unteransprüchen angegeben.

Gemäß der Erfindung wird nun vorgeschlagen, eine Kluppenkette mit einem an sich bekannten Verstellmechanismus zur Teilungsänderung zu verwenden, wobei die einzelnen Kluppenkörper mit einem lageveränderlichen Kluppentisch etwa gemäß DE-Patentanmeldung P 41 23 476.6 ausgerüstet sind.
Verfahrensseitig ist nun etwa folgender Ablauf zu verzeichnen:
Im Einlaufbereich der Folienbahn und somit auch im Bereich der Umlenkung der Kluppenkette weist die Kluppenkette eine sogenannte Grundteilung "T" auf. Die Spannmittel jeder Kluppe befinden sich hier in waagerechter Lage, also in der Ebene der zuzuführenden Folienbahn. Die Folienbahn kann hier in bekannter Weise der Reckvorrichtung zugeführt und eingekluppt werden.
Unmittelbar nach dem Einkluppen, also nachdem die Folienbahn an ihren Rändern von den betreffenden Kluppenpaaren erfaßt ist, wird die Kluppenkette aus ihrer Grundteilung "T" in an sich bekannter Weise auf die sogenannte Schrumpfteilung "t" verändert (t<T), im Sinne einer Abstandsverkürzung zwischen den einzelnen Kluppenkörpern der Kluppenkette. Gleichzeitig mit der Abstandsverkürzung erfolgt die Lageveränderung der Spannmittel z.B. durch Verschwenken um eine die Spannmittel tragende Querachse. Teilungsveränderung bzw. Abstandsverkürzung zwischen den Einzelkluppen und Lageveränderung der Spannmittel stehen dabei in direktem Zusammenhang.
Beide Bewegungen sind so ausgelegt, daß keine zusätzliche Reckung der Folienbahn stattfindet.

In dem Bereich des Folienbahn-Einlaufs sind die erforderlichen Stellkräfte zur Veränderung der Teilung noch relativ gering, da noch keine Reckkräfte aus dem biaxialen Recken der Folienbahn auf die Kluppenketten wirksam werden.
Aus diesen gleichzeitig ablaufenden Bewegungen (Teilungsveränderung und Lageveränderung) wird eine wellenartige Konfiguration der Folienbahn erreicht. Mit dieser Konfiguration wird die Folienbahn durch den Aufheizbereich in den Reckbereich gefahren. In dem den Reckbereich folgenden Fixierbereich, in dem der Schrumpf bewirkt werden soll, erfolgt die Rückstellung der Lageveränderung der Spannmittel. Mit der Rückstellung der Lageveränderung der Spannmittel wird zwischen jeweils zwei Kluppenkörper ein freier oder loser Abschnitt von Folienbahn dem Schrumpfprozeß ausgesetzt.
Am Ende des Fixierbereiches wird die behandelte Folienbahn ausgekluppt. Dies erfolgt bevor die Kluppenkette in das jeweilige Antriebsrad der Reckvorrichtung einläuft. In diesem nach dem Folienfreigeben liegenden Bereich wird die Kluppenkette auch wieder aus der Schrumpfteilung "t" in die Grundteilung "T" zurück geführt, die sie vor dem Einkluppen der Folienbahn besaß. Auch hier kommen wieder relativ geringe Verstellkräfte in Anwendung, da jetzt die Zugkraft der Kluppenkette unterstützend auf die Rückstellung der Kluppenkörper wirkt.
Mit der erfindungsgemäßen Lösung werden die Vorteile beider Systeme, also ein an sich bekanntes System zur Abstandsveränderung zwischen den einzelnen Spannkluppen mit dem System nach DE-Patentanmeldung P 41 23 476.6, zur Erzielung einer Schrumpfung derart vereint, daß die Verstellbewegungen mit relativ geringen Stellkräften auskommen und jeder sich ergebende Betriebszustand beherrschbar ist.

Die Erfindung soll nachstehend anhand eines Ausführungsbeispieles näher erläutert werden. Es zeigen:
- Fig. 1: eine schematische Darstellung einer halbseitigen Kluppenkette mit Spannkluppen und Kettenzugkraft-Verlauf
- Fig. 2: die Vorderansicht mehrerer in einer Kluppenkette eingebundene Spannkluppen mit lageveränderlichen Spannmittel bei einem Neigungswinkel der Spannmittel α = 0^{o} und einer Grundteilung "T" zwischen den Spannkluppen im Einlaßbereich
- Fig. 3: die gem. Fig. 2 dargestellten Spannkluppen mit Spannmitteln bei einem Neigungswinkel der Spannmittel α > 0^{o} und bei eingestellter Schrumpfteilung "t" zwischen den Spannkluppen im Aufheizbereich.
- Fig. 4: die gem. Fig. 2 dargestellten Spannkluppen mit Neigungswinkel der Spannmittel α = 0^{o} und bei eingestellter Schrumpfteilung "t" zwischen den Kluppen im Fixierbereich (Schrumpfung).

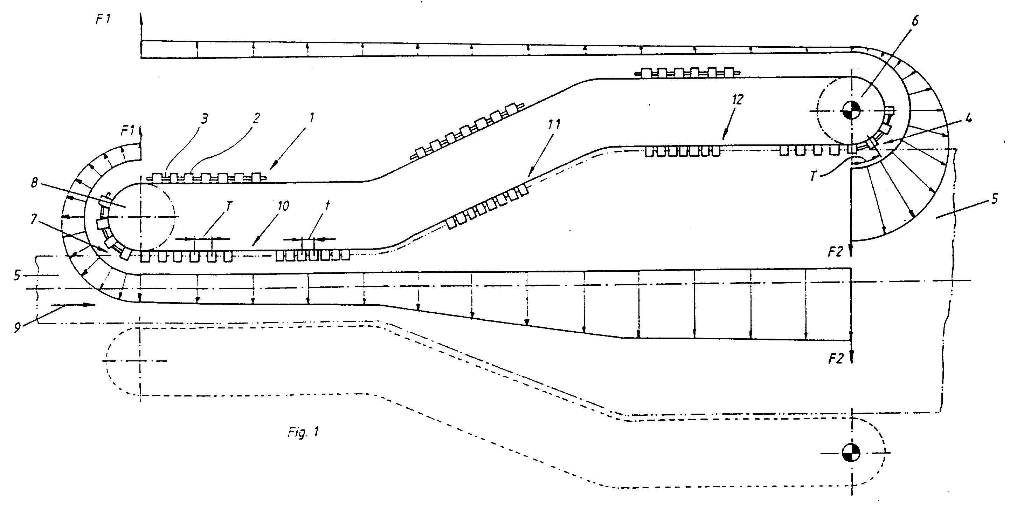

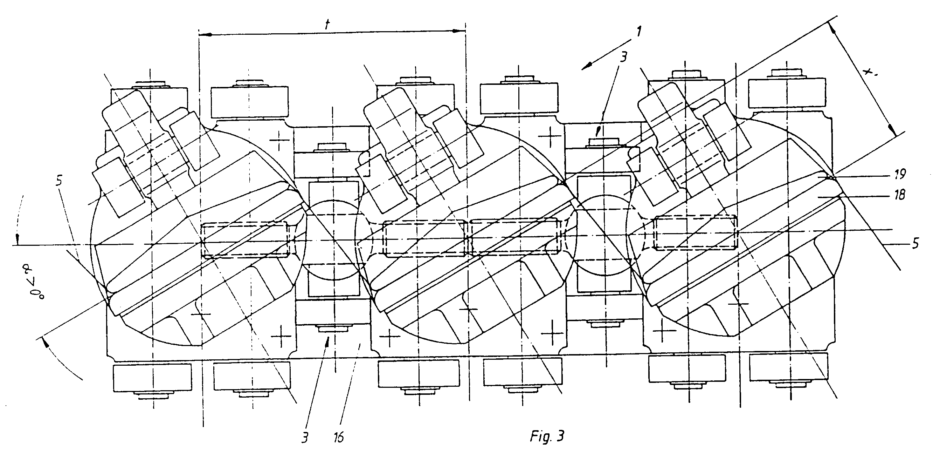

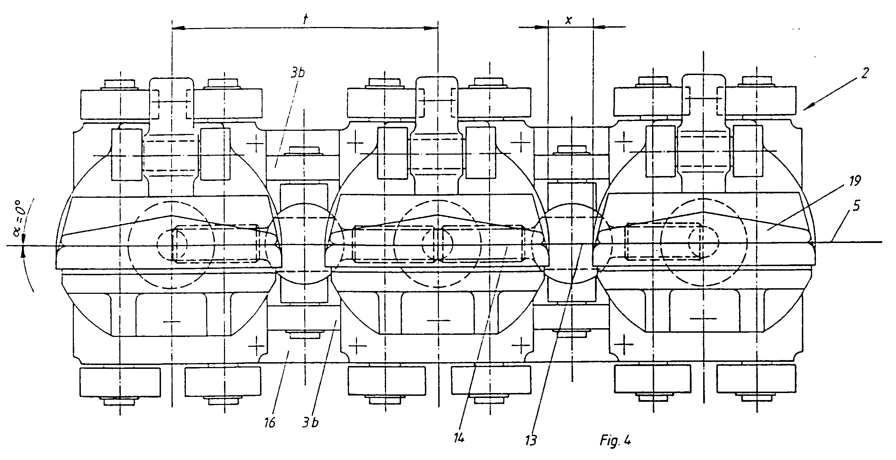

Fig. 1 zeigt eine halbseitige teilungsveränderliche Endloskluppenkette 1 einer Folienreckvorrichtung. Die die Kluppenkette 1 bildenden Einzelkluppen 2 sind über Verbindungs- und Verstellelemente 3 miteinander verbunden. Die Einzelkluppen 2 sind gem. der DE-Patentanmeldung P 41 23 476.6 als Schwenkkluppen oder als Kluppen mit lageveränderlichen Spannmittel 18,19 (Fig. 3) ausgebildet. Die Kluppenkette 1 wird im Auslaufbereich 4 der Folienbahn 5 über ein Antriebsrad 6 angetrieben.
Im Einlaßbereich 7 der Folienbahn 5 wird die Kluppenkette 1 über eine Umlenkung 8 geführt.
Zur Behandlung der Folienbahn - im Sinne der zu lösenden erfindungsgemäßen Aufgabe - wird die unbehandelte Folienbahn 5 im Einlaßbereich 7 einer Folienreckvorrichtung an ihren Rändern von den Einzelkluppen 2 aufgenommen und eingekluppt. Die Kluppenkette 1 besitzt hier eine sogenannte Grundteilung "T".
Die Folienbahn 5 wird gem. Pfeilrichtung 9 bewegt und gelangt nach dem Einlaßbereich 7 in den Aufheizbereich 10. In diesen Bereichen erfolgt eine gesteuerte Teilungsänderung in der Kluppenkette, d.h. der Mittenabstand zweier aufeinanderfolgender Einzelkluppen 2 wird gegenüber der Grundteilung "T" verändert.
Im vorliegenden Falle erfolgt eine gesteuerte Reduzierung auf das Maß "t" auf die sogenannte Schrumpfteilung bzw. auf das Maß "x". Gleichzeitig mit der gesteuerten Teilungsänderung erfolgt eine gesteuerte Lageveränderung der die Folienbahnränder aufnehmenden Spannmittel 18,19 der Kluppen 2 (Fig. 3). Diese Lageveränderung kann in einem gesteuerten Verschwenken oder Vertikalversatz der Spannmittel 18,19 erfolgen. Aufgrund der Teilungsänderung von "T" nach "t" wird zwischen den Spannkluppen 2 zunächst ein Überschuß oder eine Längenreserve "x'" an Bahnmaterial geschaffen (Fig.3), der durch das Verschwenken oder das Vertikalversetzen der Spannmittel 18,19 aufgenommen wird. Diese Maßnahmen führen dazu, daß die Folienbahn 5 mit Einleitung der Teilungsänderung der Kluppenkette 1 und der Lageveränderung der Spannmittel 18,19 als zwangsweise wellenartig ausgebildete Folienbahn aus dem Aufheizbereich 10, durch den Reckbereich 11 bis in den Anfang des Fixierbereiches 12 geführt wird. Nachdem die Kluppenkette mit der wellenartigen Folienbahn den Reckbereich 11 passiert hat und in den Fixierbereich 12 eingefahren ist, erfolgt ein gesteuertes Rückführen der lageveränderten Spannmittel 18,19. Damit kann die zwischen den Spannmitteln 18,19 zweier benachbarter Spannkluppen 2 liegende Längenreserve "x'" der Folienbahn 5 dem nun eintretenden Schrumpfprozeß ausgesetzt werden. Das Schrumpfen der Folienbahn 5 ist nun soweit möglich, bis die geschaffene Längenreserve "x'" durch den Schrumpfprozeß bis auf den Betrag "x" (Fig. 4) aufgebraucht ist.
Nachdem das Schrumpfen beendet ist, liegen zwischen den Spannkluppen 2 planebene Folienbahnabschnitte 13 vor, die sich nahtlos an die eingekluppten Folienbahnabschnitte 14 anschließen (Fig. 4). Die Folienbahn wird nun ausgekluppt und über den Auslaßbereich 4 abgezogen. Nachfolgend, noch bevor die auf die Schrumpfteilung "t" eingestellten Spannkluppen 2 zu dem Antriebsrad 6 gelangen, wird die folienfreie Kluppenkette 2 in die Grundteilung "T" zurück gesteuert.

Bei diesem vorbeschriebenen Verfahrensablauf, mit den erfindungsgemäß vereinigten Merkmalen einer teilungsveränderlichen Kluppenkette und mit lageveränderlichen Spannmitteln stellt sich nun als besonders vorteilhaft heraus, daß die aufzubringenden Kräfte für die mechanische Verstellung sowohl für die Veränderung der Kettenteilung als auch für die Lageveränderung der Spannmittel Größenordnungen annehmen, die beherrschbar sind und zu keiner Funktionsbeeinträchtigung der Reckvorrichtung insgesamt führen. Außerdem ist das Einführen der Folienbahn problemlos möglich.
Fig. 1 veranschaulicht diese Aussage anhand des schematisiert dargestellten Kettenzugkraftverlaufes.
Mit F₁ wird die Kettenzugkraft bezeichnet, die im Einlaß- und Aufheizbereich 7 bzw. 10 der Folienreckmaschine wirksam ist. In diesen Bereichen liegt eine vergleichsweise geringe Zugspannung in der Kluppenkette 1 vor. Hier erfolgt die mechanische Verstellung zur Teilungsänderung von "T" nach "t" mit Verstellkräften die in vertretbarer Größenordnung liegen. Die Verstellkraft muß in diesem Bereich die Kettenzugkraft F₁ überwinden.
Im Verlaufe des biaxialen simultanen Folienreckprozesses wird eine maximale Kettenzugkraft F₂ erreicht, die über dem gesamten Fixierbereich 12 bis hin zum Auskluppen der Folienbahn 5 konstant gehalten wird.

Nach dem Auskluppen, d.h. nach der Freigabe der Folienbahnränder durch die Spannkluppen 2, erfolgt die mechanische Rückstellung der Kluppenkörper 2 auf die Teilung "T". Dabei wirkt, im Gegensatz zur Verstellung von "T" nach "t", die Kettenzugkraft unterstützend auf die Verbindungs- und Stellelemente 3 bzw. unterstützend auf die jeweiligen mit den Kluppenkörpern in Verbindung stehenden Verstellmittel.

Nachdem die Kluppenkörper 2 das Antriebsrad 6 passiert haben geht die Kettenzugkraft auf die Größe F₁ zurück.
Die Kettenzugkraft steigt zwar aufgrund der vorhandenen Reibung zwischen den Kluppenkörpern 2 und deren Bahnträger geringfügig auf F₁ + F_{R} an (F_{R}=Reibkraft), was jedoch auf die mechanische Teilungsverstellung der Kluppenkette 1 im Bereich der Folienbehandlung keinen Einfluß hat.

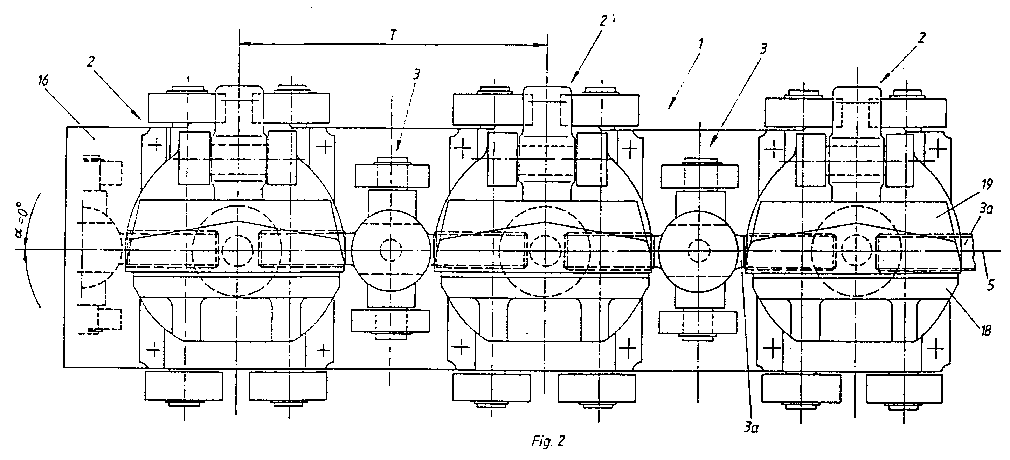

Fig. 2 zeigt eine mögliche Ausführungsart der teilungsveränderlichen Endloskluppenkette 1, bestehend aus den Einzelkluppen 2, die untereinander durch ein Verbindungs- und zugleich Verstellelement 3 verbunden sind. Aufbau des Elementes 3, sein Zusammenwirken mit den Spannkluppen 2 und mit einer Steuerschiene 16 gehen aus der DE-Patentanmeldung P 41 23 840.0 hervor, so daß hierauf nicht näher eingegangen werden muß.
Die Spannkluppen sind hier mit einem lageveränderlichen Kluppentisch 18 und einem mit dem Kluppentisch zusammenwirkenden Kluppenkläppchen 19 ausgebildet. Beide Teile bilden die bereits vorstehend erwähnten Spannmittel.
Die DE-Patentanmeldung P 41 23 476.6 beschreibt den Aufbau und die Wirkungsweise einer Schwenkkluppe bzw. einer Kluppe mit lageveränderlichen Spannmitteln.
Der in der Fig. 2 gezeigte Teil einer teilungsveränderlichen Kluppenkette wird aus den Einzelkluppen 2, die einander durch das Verbindungs- und Stellelement 3 verbunden sind, gebildet.
Mit "T" ist hier die Grundteilung zwischen zwei einander benachbarter Einzelkluppen bezeichnet. Diese Grundteilung "T" ist z.B. mittels des in Art eines Kreuzstückes ausgebildeten Elementes 3, welches mit seitlich vorhandenen Gewindespindeln 3a ausgerüstet ist, veränderbar. Die Gewindespindeln 3a greifen in Gewindebohrungen der Kluppenkörper 2 ein. In Verbindung mit der Steuerschiene 16, mit welcher die Steuerrollen 3b zeitweilig in Wirkverbindung stehen, ist die Kettenteilung veränderbar.
Andere bekannte Lösungsmöglichkeiten zur Teilungsänderung sind in ihrer Anwendung nicht ausgeschlossen.
Die lageveränderlichen Spannelemente 18,19, zwischen welchen der Rand der Folienbahn eingespannt ist, sind um eine im Kluppenkörper 2 angeordnete, hier nicht näher dargestellte Querachse schwenkbar gelagert.

Wie Fig. 2 zeigt, weist hier die Kluppenkette 1 eine Grundteilung "T" zwischen den einzelnen Spannkluppen 2 auf. Die schwenkbar ausgebildeten Spannmittel 18,19 der Kluppen 2 befinden sich in einer neutralen Position, also in unverschwenktem Zustand.
Die Folienbahn ist hier zwischen dem Kluppentisch 18 und dem Kluppenkläppchen 19 jeder Spannkluppe 2 eingespannt. Dies ist der Betriebszustand der Kluppenkette 1 unmittelbar nach dem Einkluppen der Folienbahn 5.

Fig. 3 zeigt die Kluppenkette 1 im Einlaß- oder Aufheizbereich 7 bzw. 10 der Folienreckmaschine. Verbindungs- und Verstellelemente 3 verändern aufgrund der zeitweiligen Wirkverbindung mit Steuerschiene 16 die Teilung zwischen den Einzelkluppen. Der Mittenabstand zwischen den Einzelkluppen 2 ist, von der Grundteilung "T" ausgehend, auf die Schrumpfteilung "t" reduziert.
Gleichzeitig erfolgt ein gleichsinniges oder entgegengerichtetes Verschwenken der die Folienbahn 5 tragenden Spannmittel 18,19 um einen Schwenkwinkel "α".
Damit wird der aus der Teilungsänderung resultierende "Überschuß" freier Folienbahnlänge zwischen den Kluppenkörpern 2 zwangsweise in eine gestreckte Lage gebracht. Die eingekluppte Folienbahn 5 nimmt dabei sowohl in ihren Randbereichen als auch, so haben es praktische Untersuchungen gezeigt, über ihre gesamte Breite eine wellenartige Form an.
Die Schrumpfteilung "t" der Kette und die Lageveränderung der Spannmittel der Kluppe und damit auch die wellenartige Form der Folienbahn wird über den Reckbereich 11 bis zu Beginn des Fixierbereiches 12 aufrechterhalten.
Mit dem Eintritt der wellenartig ausgebildeten Folienbahn in den Fixierbereich 12 wird die Schwenklage der die Folienbahn haltenden Spannmittel 18,19 gesteuert aufgehoben. Daraufhin setzt der Schrumpfprozeß der Folienbahn 5 im Fixierbereich 12 ein und hält solange an, bis die Folienbahn 5 auf das Maß, das sich aus der Differenz zwischen der Grundteilung "T" und der Schrumpfteilung "t" ergibt, geschrumpft ist.
Fig. 4 zeigt die abgeschlossene Schrumpfung der Folienbahn 5 im Fixierbereich 12. Die Folienbahn 5 liegt hier mit den geschrumpften Abschnitten als ebenflächige Bahn vor. Nach dem Passieren des Fixierbereiches 12, also nach Abschluß des Schrumpfprozesses, wird die Folienbahn 5 durch Betätigen des Kluppenkläppchens 19 der jeweiligen Spannkluppe 2 freigegeben.
Über das mit der Steuerschiene 16 mittels der Steuerrollen 3b in Eingriff kommende Verbindungs- und Verstellelement 3 werden nun die Kluppenkörper 2 in die Kettengrundteilung "T" zurückgestellt.

Mit der Kombination von Mitteln zur Teilungsänderung mit lageveränderlichen Spannmitteln ist die Möglichkeit geschaffen worden, ein hinreichendes Maß an freier Folienbahnlänge zwischen den Kluppen bzw. ihren Spannmitteln zur Schrumpfung zur Verfügung zu stellen.

## Patentansprüche

1. Verfahren zum Schrumpfen biaxial gereckter thermoplastischer Folienbahnen auf Folienreckmaschinen, die einen Einlaß-, Aufheiz-, Reck-, Fixier- und Auslaßbereich aufweisen, wonach die ebenflächige Folienbahn einer teilungsveränderlichen Kluppenkette zugeführt und in diese eingekluppt wird und wobei die Spannmittel jeder Spannkluppe im Einlaßbereich der Folienreckmaschine in der Ebene der Folie liegen, **gekennzeichnet durch** die Kombination folgender Arbeitsschritte
a) im Einlaß- und/oder Aufheizbereich bilden eines in Größe und Lage definierten Materialüberschusses zwischen den einzelnen Kluppenkörpern durch simultanes Verändern der Teilung der Kluppenkette und der Lage der den Folienbahnrand aufnehmenden Spannmittel,
b) nachfolgendes Querrecken der Folie nach in an sich bekannter Weise im Reckbereich,
c) daraufhin Aufheben der Lageveränderung der Spannmittel im Fixierbereich,
d) vor bzw. bei Erreichen des Auslaufbereiches, aber nach der Freigabe der Folienbahnränder, Aufheben der von der Kluppenketten-Grundteilung "T" abweichenden Schrumpfteilung "t" (T>t).

2. Verfahren nach Anspruch 1, **dadurch gekennzeichnet**, daß die Lageveränderung der Spannmittel durch gesteuertes Verschwenken der Spannmittel innerhalb des Kluppenkörpers erfolgt.

3. Verfahren nach Anspruch 1, **dadurch gekennzeichnet**, daß die Lageveränderung der Spannmittel durch gesteuertes Verschieben der Spannmittel innerhalb des Kluppenkörpers erfolgt.

4. Verfahren nach Anspruch 1, **dadurch gekennzeichnet**, daß die Lageveränderung der Spannmittel durch Überlagerung einer gesteuerten Schwenk- und Schiebebewegung der Spannmittel innerhalb des Kluppenkörpers oder des Kluppenkörpers selbst erfolgt.

5. Verfahren nach Anspruch 1 und 4, **dadurch gekennzeichnet**, daß die Lageveränderung der Spannmittel oder der Kluppen zeitweilig im Gesamtprozeß der Folienbahnbehandlung aufrechterhalten wird.

6. Vorrichtung zur Durchführung des Verfahrens nach Anspruch 1, mit zwei spiegelbildlich gleichen, parallel zueinander angeordneten Kluppenkettensystemen, deren Antriebs- und Umlenkräder vorzugsweise in der Ebene der Folienbahn liegen, mit jeweils einer Kluppenkette, in die mit Spannmittel ausgerüstete Spannkluppen integriert sind und die Kluppenkettensysteme im Reckbereich der Folienbahn divergierend zueinander verlaufen,
**gekennzeichnet durch** die Kombination folgender Merkmale:
a) die die Kluppenkette (1) bildenden Spannkluppen (2) besitzen in an sich bekannter Weise Mittel (3) zur Teilungsveränderung und
b) die Spannkluppen (2) sind als Schwenkkluppen ausgebildet oder wenigstens deren Spannmittel (18,19) sind innerhalb der Spannkluppe (2) lageveränderlich angeordnet.

7. Vorrichtung nach Anspruch 6, **dadurch gekennzeichnet**, daß innerhalb der Spannkluppen (2) die Einspannebene der Spannmittel (18,19) höhenveränderlich ist.

8. Vorrichtung nach Anspruch 6, **dadurch gekennzeichnet**, daß innerhalb der Spannkluppen (2) die Einspannebene der Spannmittel (18,19) um eine parallel zur Folienbahnebene liegende Achse verschwenkbar ist.

## Claims

1. Process for shrinking biaxially stretched thermoplastic film webs on film-stretching machines having an inlet region, a heating region, a stretching region, a fixing region and an outlet region, according to which the plane film web is conveyed to a clip chain, the pitch of which is alterable, and is clipped into that chain, and wherein the clamping means of each clamping clip in the inlet region of the film-stretching machine lie in the plane of the film, characterised by the combination of the following operating steps
a) in the inlet and/or heating region, formation of a surplus of material, defined in size and position, between the individual clip bodies by simultaneous alteration of the pitch of the clip chain and the position of the clamping means receiving the edge of the film web,
b) subsequent transverse stretching of the film in a manner known per se in the stretching region,
c) then cancellation of the change in position of the clamping means in the fixing region,
d) before or on reaching the run-out region, but after releasing the edges of the film web, cancellation of the shrinkage pitch "t" deviating from the basic clip chain pitch "T" (T>t).

2. Process according to claim 1, characterised in that the change in position of the clamping means is effected by controlled pivoting of the clamping means within the clip body.

3. Process according to claim 1, characterised in that the change in position of the clamping means is effected by controlled displacement of the clamping means within the clip body.

4. Process according to claim 1, characterised in that the change in position of the clamping means is effected by the superimposition of a controlled pivoting and pushing movement of the clamping means within the clip body or of the clip body itself.

5. Process according to claims 1 and 4, characterised in that the change in position of the clamping means or the clips is maintained intermittently in the total process of the film web treatment.

6. Apparatus for carrying out the process according to claim 1, having two mirror-image clip chain systems arranged in parallel with one another, the drive and deflecting wheels of which preferably lie in the plane of the film web and each of which has a clip chain into which clamping clips equipped with clamping means are integrated, the clip chain systems diverging from one another in the stretching region of the film web,
characterised by the combination of the following features:
a) the clamping clips (2) forming the clip chain (1) have, in a manner known per se, means (3) for altering the pitch and
b) the clamping clips (2) are in the form of pivoting clips or at least the clamping means (18, 19) thereof are arranged within the clamping clip (2) in such a manner that their position is alterable.

7. Apparatus according to claim 6, characterised in that the height of the clamping plane of the clamping means (18, 19) is alterable within the clamping clips (2).

8. Apparatus according to claim 6, characterised in that the clamping plane of the clamping means (18, 19) is pivotable within the clamping clips (2) about an axis lying parallel to the plane of the film web.

## Revendications

1. Procédé de rétrécissement de longues feuilles ou de longs films thermoplastiques ayant subi un rétrécissement biaxial, sur des machines pour le rétrécissement des feuilles comportant une zone d'entrée, une zone de chauffage, une zone de rétrécissement, une zone de fixation et une zone de sortie, procédé selon lequel la longue feuille à surface plate est acheminée vers une chaîne à pinces dont le pas des pinces peut être modifié et la feuille y est pincée, et selon lequel les organes tenseurs de chaque pince de tension se situent dans le plan de la feuille dans la zone d'entrée de la machine à étirer des feuilles, procédé caractérisé par la combinaison des étapes opératoires suivantes:
a) dans la zone d'entrée et/ou de chauffage, formation d'un excès de matière, de grandeur et position définies, entre les divers corps de pince, par modification simultanée du pas de répartition des pinces de la chaîne et de la position des organes de tension recevant les bords des longues feuilles,
b) puis étirage transversal des feuilles, d'une façon connue en elle-même, dans la zone d'étirage,
c) puis suppression de la modification de position des organes de tension dans la zone de fixage,
d) avant que soit atteinte ou au moment où est atteinte la zone de sortie, mais après la libération des bords des longues feuilles, suppression de la répartition des effets de rétrécissement "t" s'écartant de la répartition de base "T" des pinces de la chaîne (T>t).

2. Procédé selon la revendication 1, caractérisé en ce que la modification de position des organes tenseurs est obtenue par glissement commandé des organes tenseurs à l'intérieur du corps des pinces.

3. Procédé selon la revendication 1, caractérisé en ce que la modification de position des organes tenseurs par décalage de glissement commandé des organes tenseurs a lieu à l'intérieur du corps des pinces.

4. Procédé selon la revendication 1, caractérisé en ce que la modification de position des organes tenseurs a lieu par superposition d'un mouvement commandé de pivotement et de glissement des organes tenseurs à l'intérieur du corps des pinces ou du corps des pinces lui-même.

5. Procédé selon la revendication 1 et la revendication 4, caractérisé en ce que la durée de la modification de position des organes tenseurs ou des pinces est maintenue au cours de l'ensemble des opérations du procédé de traitement des longues feuilles.

6. Dispositif ou appareil pour la mise en oeuvre du procédé selon la revendication 1, cet appareil comportant deux systèmes de chaîne à pinces disposés parallèlement l'un à l'autre et l'un constituant l'image de l'autre dans un miroir, dont les roues ou poulies d'entraînement et de renvoi se situent de préférence dans le plan de la longue feuille, chaque système comportant une chaîne à pinces dans laquelle sont intégrées des pinces de tension équipées d'organes tenseurs et des systèmes de chaîne à pinces divergeant l'un par rapport à l'autre dans la zone de tension des longues feuilles, appareil caractérisé par la combinaison des particularités suivantes:
a) les pinces (2) de tension formant la chaîne à pinces (1) possèdent, de façon connue en soi, des organes (3) pour la modification de la répartition du pas des pinces, et
b) les pinces de tension (2) sont conformées en des pinces pivotantes ou au moins leurs organes de tension (18, 19) sont disposés de façon à pouvoir changer de position à l'intérieur des pinces (2) de tension.

7. Appareil selon la revendication 6, caractérisé en ce qu'à l'intérieur des pinces (2) de tension, le plan de serrage des organes de tension (18, 19) peut être modifié en hauteur.

8. Appareil selon la revendication 6, caractérisé en ce que, à l'intérieur des pinces (2) de tension, le plan de serrage de tension des organes tenseurs (18, 19) peut pivoter autour d'un axe parallèle au plan des longues feuilles.
